# EUROPÄISCHE PATENTANMELDUNG

(11) **EP 4 332 395 A1**
(43) Veröffentlichungstag der Anmeldung: **06.03.2024**
(21) Anmeldenummer: 23191127.2
(22) Anmeldetag: 11.08.2023
(51) Int. Cl.: F16C 19/26, F16C 19/36, F16C 33/46, F16C 33/51, F16C 33/54

(54) **KÄFIGSEGMENT FÜR EINEN SEGMENTKÄFIG**

(30) Priorität: 01.09.2022 DE 102022209077
(71) Anmelder: Aktiebolaget SKF, 415 50 Göteborg (SE)
(72) Erfinder: Beyfuss, Berthold, 97535 Wasserlosen-Kaisten (DE); Friedrich, Hans-Juergen, 97486 Königsberg-Römershofen (DE); Radina, Alfred, 97711 Maßbach (DE); Soellner, Maximilian, 97494 Bundorf (DE); Schierling, Jonas, 97437 Hassfurt (DE); Kemmer, Martin, 97440 Werneck (DE); Tanke, Jesko-Henning, 97422 Schweinfurt (DE)
(74) Vertreter: Kuhstrebe, Jochen

(57) **Zusammenfassung**

Offenbart wird ein Käfigsegment (1) für einen Segmentkäfig, insbesondere für Großwälzlager, wobei das Käfigsegment (1) eine Tasche (8) bildet, die dazu geeignet ist, zumindest einen Wälzkörper (10) aufzunehmen, wobei das Käfigsegment (1) an einer Seite (18), die einer Stirnfläche (20) des zumindest einen Wälzkörpers (10) gegenüberliegt, zumindest ein Kontaktelement (22) aufweist, das in die Tasche (8) des Käfigsegments (1) auskragt und dazu ausgelegt ist, den zumindest einen Wälzkörper (10) zu kontaktieren.

## Beschreibung

Vorliegende Erfindung betrifft ein Käfigsegment für einen Segmentkäfig gemäß dem Oberbegriff von Patentanspruch 1.

Die Wälzkörper eines Wälzlagers können beispielsweise im Wälzlager durch Wälzlagerkäfige geführt und gehalten werden. Dabei können die Wälzkörper zumindest teilweise an einer Fläche des Wälzlagerkäfigs anlaufen. Beispielsweise können rollenartige Wälzkörper, wie zum Beispiel Zylinder- oder Kegelrollen an ihren Stirnflächen eine relative plane Fläche aufweisen. Kommt diese plane Stirnfläche mit einer ebenfalls planen Fläche des Käfigs in Kontakt kann ein Schmiermittel, das in dem Wälzlager zum Schmieren der Kontaktflächen zwischen den Wälzkörpern, dem Käfig und/oder anderen Bereichen des Wälzlagers, wie beispielsweisen einer Lauffläche, einem Führungsbord und/oder einem Haltebord, vorgesehen ist, in diesem Kontaktbereich abgeschabt werden. Dies kann dazu führen, dass das Wälzlager vorzeitig verschleißt.

Es ist deshalb Aufgabe vorliegender Erfindung, ein Käfigsegment für einen Segmentkäfig mit einer verbesserten Verschleißfestigkeit bereitzustellen.

Diese Aufgabe wird durch ein Käfigsegment für einen Segmentkäfig gemäß Patentanspruch 1 gelöst.

Im Folgenden wird ein Käfigsegment für einen Segmentkäfig, insbesondere für Großwälzlager vorgeschlagen. Das Wälzlager kann insbesondere ein Rollenlager sein, d.h. ein Wälzlager mit rollenförmigen Wälzkörpern, wie zum Beispiel Kegelrollen, Zylinderrollen, Tonnen, Nadeln, und dergleichen. Des Weiteren bildet das Käfigsegment eine Tasche, die dazu geeignet ist, zumindest einen Wälzkörper aufzunehmen.

Um die Verschleißfestigkeit des Käfigsegment bzw. des darin aufgenommenen Wälzkörpers zu erhöhen, weist an einer Seite, die einer Stirnfläche des zumindest einen Wälzkörpers gegenüberliegt, zumindest ein Kontaktelement auf, das in die Tasche des Käfigsegments auskragt und dazu ausgelegt ist, den zumindest einen Wälzkörper zu kontaktieren. Dies hat ferner den Vorteil, dass die Reibung an der Stirnfläche des zumindest einen Wälzkörpers reduziert werden kann, da der zumindest eine Wälzkörper lediglich an dem zumindest einen Kontaktelement anläuft und nicht an dem Käfigsegment selbst.

Gemäß einer weiteren Ausführungsform weist der zumindest eine Wälzkörper einen Anlagebereich und einen Vertiefungsbereich auf, wobei der Vertiefungsbereich in einer Mitte der Stirnfläche angeordnet ist und der Anlagebereich um den Vertiefungsbereich herum angeordnet ist, und wobei das zumindest eine Kontaktelement so angeordnet ist, dass das zumindest eine Kontaktelement die Stirnfläche im Anlagebereich kontaktiert. Insbesondere kann der Vertiefungsbereich ein sogenannter Dimpel sein. Ferner kann der Anlagebereich eine gekrümmte Oberfläche, zum Beispiel eine kalottenförmige Oberfläche, aufweisen. Dadurch, dass das zumindest eine Kontaktelement die Stirnfläche des zumindest einen Wälzkörpers im Bereich der Anlagefläche kontaktiert, kann verhindert werden, dass das Käfigsegment an einer Kante, die den Übergang von dem Anlagebereich zu dem Vertiefungsbereich bildet, anläuft. Dies kann verhindern, dass ein Schmiermittel, das in dem Wälzlager eingesetzt wird, an der Kante abgeschabt wird.

Bevorzugt ist das zumindest eine Kontaktelement durch Umformen des Käfigsegments gebildet. Beispielsweise kann das zumindest eine Kontaktelement geprägt, gestanzt, geschnitten und/oder gebogen sein. Dies ermöglicht eine effiziente und kostensparende Formgebung des zumindest einen Kontaktelements in dem Käfigsegment. Insbesondere kann zunächst die Kontur des zumindest einen Kontaktelements teilweise geschnitten und/oder gestanzt, insbesondere freigestanzt, werden und anschließend das Kontaktelement in die gewünschte Form und/oder Position gebogen werden. Wird das zumindest eine Kontaktelement geprägt, kann ein Arbeitsschritt ausreichend sein, um das zumindest eine Kontaktelement zu formen.

Alternativ kann das zumindest eine Kontaktelement als ein separates Element gebildet und mit dem Käfigsegment verbunden sein. Ferner kann das separat gebildete Kontaktelement lösbar oder unlösbar mit dem Käfigsegment verbunden werden. Insbesondere kann das separat gebildete Kontaktelement kraftschlüssig, formschlüssig und/oder stoffschlüssig an dem Käfigsegment befestigt werden. Beispielsweise kann das zumindest eine separat gebildete Kontaktelement an das Käfigsegment geschweißt, geklebt, geschraubt, genietet und/oder geklemmt werden.

Gemäß einer weiteren Ausführungsform weist das zumindest eine Kontaktelement eine Form auf, die an eine Form des Anlagebereichs angepasst ist. Beispielsweise kann der Anlagebereich ringförmig und das zumindest eine Kontaktelement kann eine der Ringform entsprechende Bogenform aufweisen. Ferner kann eine Anordnung des zumindest einen Kontaktelements an die Form und/oder Anordnung des Anlagebereichs angeordnet sein. Durch die an die Form des Anlagebereichs angepasste Form des zumindest einen Kontaktelements kann ein verbesserter Kontakt zwischen dem zumindest einen Kontaktelement und dem zumindest einen Wälzkörper sichergestellt werden. Dies hat ferner den Vorteil das auch eine Schmiermittelverteilung in dem Wälzlager verbessert werden kann. Bevorzugt kann das zumindest eine Kontaktelement linsenförmig und/oder nierenförmig ausgebildet sein. Dies ermöglicht, das Schmiermittel besser an den zumindest einen Wälzkörper und/oder an ein Führungsbord des Wälzlagers zu leiten. Ferner kann das zumindest eine Kontaktelement mit einer Struktur, wie beispielsweise einer Leitkurve, versehen sein, die dazu ausgebildet ist, Schmiermittel zu leiten. Beispielsweise kann die Struktur als eine Vertiefung oder eine Erhöhung ausgebildet sein.

Bevorzugt kann das Käfigsegment mit mehreren Kontaktelementen versehen sein. Dadurch kann ein Kontakt zwischen dem Käfigsegment und einer Stirnfläche des zumindest einen Wälzkörpers gleichmäßiger gestaltet werden, so dass die Gefahr, dass Schmiermittel durch den Kontakt zwischen Kontaktelement und Wälzkörper abgeschabt wird, weiter reduziert werden kann. Beispielsweise können die mehreren Kontaktelemente derart angeordnet sein, dass ihre Kontaktpunkte mit dem zumindest einen Wälzkörper symmetrisch über den Anlagebereich des Wälzkörpers verteilt sind.

Ferner kann das Käfigsegment aus zumindest einem Blechbauteil mit zumindest einer Fügestelle zusammengefügt sein. Vorteilhafterweise kann die zumindest eine Fügestelle auch eine Einstellungsmöglichkeit bereitzustellen, sodass die Fügestelle dazu geeignet ist, Fertigungstoleranzen zu kompensieren. Ein Käfigsegment aus einem Blechbauteil ist insbesondere durch die Materialeinsparung gegenüber einem aus dem Vollen gefrästen einteiliger Käfig oder einem Segmentkäfig aus PEEK-Kunststoff günstiger, da zum einen der Materialeinsatz geringer ist und zum anderen der Materialausnutzungsgrad höher ist als bei herkömmlichen Wälzlagerkäfigen. Ferner kann das Käfigsegment aus zumindest einem Blechbauteil zumindest eine gebogene Ecke aufweisen. Dadurch, dass das zumindest eine Kontaktelement in die Tasche auskragt, wird ermöglicht, dass der in der Tasche aufgenommene Wälzkörper nicht direkt an dem Käfigsegment anliegt. Dadurch kann vorteilhafterweise ein Biegeradius für die Ecke vergrößert werden, so dass ein Freiraum zwischen einer radialen Kante des Wälzkörpers und dem Käfigsegment geschaffen werden kann. Die Vergrößerung des Eckradius hat ferner den Vorteil das Kerbspannung in dem Käfigsegment reduziert und die Festigkeit des Käfigsegments erhöht werden kann.

Bevorzugt ist jeweils ein Kontaktelement in Umfangsrichtung seitlich neben der Fügestelle angeordnet. Dies hat den Vorteil, dass im Bereich der Fügestelle ein Kontakt zwischen der Fügestelle und der Stirnfläche des Wälzkörpers verhindert und daher auf eine Nachbearbeitung der Fügestelle verzichtet werden kann. Alternativ oder zusätzlich kann auch eine Schweißnaht für die Fügestelle dicker ausgeführt werden, wodurch eine Stabilität des Käfigsegment erhöht werden kann. Ferner kann zusätzlich zu einer Schweißraupe auf der Außenseite auch eine Schweißraupe auf der Innenseite angebracht werden.

Gemäß einer weiteren Ausführungsform liegt in einer Vorstufe der Fertigung das Käfigsegment als Bausatz vor, der aus einem oder mehreren, ebenen Metallblechbauteilen besteht, die dazu ausgelegt sind, zusammengesetzt zu werden, um das Käfigsegment auszubilden, wobei das zumindest eine Kontaktelement in zumindest einem der Metallblechbauteile des Käfigsegments ausgebildet ist. Bevorzugt wird das zumindest eine Kontaktelement in der Vorstufe der Fertigung ausgebildet. Dadurch kann ein Materialeinsatz und/oder Fertigungsaufwand reduziert werden. Beispielsweise kann das eine oder die mehreren Metallblechbauteile des Käfigsegments aus einem Metallblech geschnitten, insbesondere lasergeschnitten, gestanzt und/oder genibbelt sein, so dass vorteilhafterweise nur geringe Werkzeugkosten entstehen. Mit anderen Worten werden die für das Käfigsegment benötigten Trennlinien in dem Metallblech mittels Schneiden, Stanzen, Nibbeln oder dergleichen vorgesehen. Das bedeutet, dass zunächst die Kontur des Käfigsegment in das Metallblech geschnitten oder gestanzt wird und anschließend die Form des Käfigsegments aus dem Metallblech gelöst wird. Dabei kann ein Laser, ein Stanzwerkzeug, eine Nibbelmaschine oder dergleichen verwendet werden. Vorteilhafterweise kann das Ausschneiden des Käfigsegments in eine automatisierte Fertigung in einer Montagelinie und/oder Montagezelle integriert werden.

Gemäß einem weiteren Aspekt wird ein Wälzlagerkäfig, der aus einer Mehrzahl von voranstehend beschriebenen Käfigsegmenten zusammengesetzt ist, vorgeschlagen. Insbesondere kann die Mehrzahl von Käfigsegmenten über ein Kopplungselement zumindest zeitweise verbindbar sind. Beispielsweise können die Käfigsegment zu einem geschlossenen Käfig verbunden werden. Weiterhin kann beispielsweise jeder zweite Wälzkörper in einem Käfigsegment geführt und/oder von einem Käfigsegment umfasst sein. Alternativ kann auch ein Käfigsegment für jeweils einen Wälzkörper vorgesehen sein.

Gemäß noch einem weiteren Aspekt wird ein Wälzlager, insbesondere ein Großwälzlager, mit mindestens einem Innenring und mindestens einem Außenring vorgeschlagen, wobei zwischen dem Innenring und dem Außenring Wälzkörper angeordnet sind, wobei die Wälzkörper durch einen oben beschriebenen Wälzlagerkäfig gehalten werden.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine perspektivische Ansicht eines Käfigsegments gemäß einer ersten Ausführungsform;
- Fig. 2:: eine Seitenansicht auf eine Anordnung aus einem Wälzkörper und dem Käfigsegment der Fig. 1,
- Fig. 3:: eine Seitenansicht auf eine Anordnung aus einem Wälzkörper und einem Käfigsegment gemäß einer zweiten Ausführungsform, und
- Fig. 4:: eine Draufsicht auf einen Ausschnitt der Anordnung aus Fig. 2.

Im Folgenden werden gleiche oder funktionell gleichwirkende Elemente mit denselben Bezugszeichen gekennzeichnet.

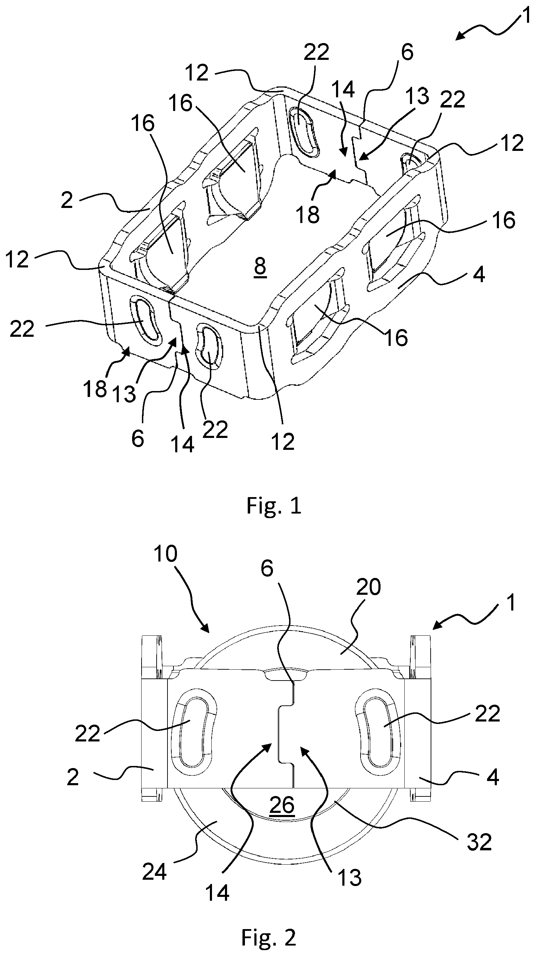

Mit Bezug auf die Fig. 1, 2 und 4 wird ein Käfigsegment 1 gemäß einem ersten Ausführungsbeispiel gezeigt, das aus zwei Metallblechbauteilen 2, 4 besteht, die an zwei Fügestellen 6 zusammengefügt sind, um eine Taschen 8 zu bilden, die dazu eingerichtet ist, zumindest einen Wälzkörper 10 (Fig. 2) aufzunehmen. Alternativ kann das Käfigsegment 1 auch nur eine Fügestelle 6 oder mehr als zwei Fügestellen 6, zum Beispiel vier Fügestellen, aufweisen. Das Käfigsegment 1 besteht in einer Vorstufe der Fertigung aus einem Bausatz mit ebenen Metallblechbauteilen. Das Käfigsegment kann insbesondere in einem Wälzlager eingesetzt werden. Beispielsweise kann das Wälzlager ein Rollenlager sein, d.h. ein Wälzlager mit rollenförmigen Wälzkörpern, wie zum Beispiel Kegelrollen, Zylinderrollen, Tonnen, Nadeln, und dergleichen.

Um das Käfigsegment 1 aus den Metallblechbauteilen 2, 4 zusammenzusetzen, werden die Metallblechbauteile 2, 4 jeweils an vorgegebenen Eckbereichen 12 gebogen und an den zwei Enden eines jeweiligen Metallblechbauteils zusammengefügt, wodurch die Fügestellen 6 gebildet werden. Das zusammengefügte Käfigsegment 1 bildet die Tasche 8, die dazu geeignet ist, zumindest einen Wälzkörper 10 aufzunehmen, wobei die Eckbereiche 12 die Ecken des Käfigsegments 1 bilden. An den Enden der Metallblechbauteil sind ein erstes Ausrichtungselement 13 und ein zweites Ausrichtungselement 14, die komplementär zueinander sind, vorgesehen. Bei der in Fig. 1 bis 3 gezeigten Ausführungsform sind die Ausrichtungselemente 13, 14 rechteckige Verzahnungen. Es sind allerdings auch andere Formen, wie beispielsweise wellenförmige, dreieckige und/oder mehreckige, vorstellbar.

Die beiden Ausrichtungselemente 13, 14 können beispielsweise gestanzt und/oder geschnitten werden. Dabei sind die Ausrichtungselemente 13, 14 dazu ausgebildet, das Käfigsegment 1 an der Fügestelle 6 derart auszurichten, dass das Käfigsegment 1 zusammengefügt werden kann. Insbesondere sind die Ausrichtungselemente 13, 14 dazu ausgelegt, die aneinander gefügten Seiten in einer ersten Richtung, die senkrecht zu der Fläche der Tasche 8 ist, festzulegen und in zumindest einer zu der ersten Richtung senkrechten Richtung eine Einstellbarkeit bereitzustellen, die dazu geeignet ist, Fertigungstoleranzen und dergleichen zu kompensieren.

Ferner sind an dem Käfigelement 1 vier Führungselemente 16 im Bereich einer Lauffläche des Wälzkörpers 10 vorgesehen, die dazu ausgelegt sind, das Käfigsegment 1 an dem Wälzkörper 10 zu führen. Es ist jedoch auch möglich, diese Führungselement 16 wegzulassen und das Käfigsegment an einem Bord des Wälzlagers und/oder an einer Laufbahn des Wälzlagers zu führen.

An den Seiten 18 des Käfigsegment 1, die den Stirnflächen 20 des Wälzkörpers 10 gegenüberliegen, sind jeweils zwei Kontaktelement 22 vorgesehen, die in die Tasche 8 des Käfigsegments 1 auskragen und dazu ausgelegt sind, den Wälzkörper 10 zu kontaktieren. Der Wälzkörper 10 umfasst insbesondere einen Anlagebereich 24 und einen Vertiefungsbereich 26, wobei der Vertiefungsbereich 26 in einer Mitte der Stirnfläche 20 angeordnet ist und der Anlagebereich 24 um den Vertiefungsbereich 26 herum angeordnet ist.

Wie in der Fig. 2 gesehen werden kann, sind die Kontaktelemente 22 so angeordnet, dass sie die Stirnfläche 20 im Anlagebereich 24 kontaktieren. Dabei ist jeweils ein Kontaktelement 22 in Umfangsrichtung seitlich neben der Fügestelle 6 angeordnet. Dies hat den Vorteil, dass im Bereich der Fügestelle ein Kontakt zwischen der Fügestelle 6 und der Stirnfläche 20 des Wälzkörpers 10 verhindert wird

Dadurch, dass die Kontaktelemente 22 die Stirnfläche 20 des Wälzkörpers 10 im Bereich der Anlagefläche 24 kontaktieren, kann verhindert werden, dass das Käfigsegment 1 an einer Kante 32, die den Übergang von dem Anlagebereich 24 zu dem Vertiefungsbereich 26 bildet, anläuft und dadurch Schmiermittel, das in dem Wälzlager eingesetzt wird, an der Kante abgeschabt wird.

Die Kontaktelement 22 sind durch Umformen des Käfigsegments gebildet. Beispielsweise können die Kontaktelemente 22 geprägt, gestanzt, geschnitten und/oder gebogen sein. Ferner weisen die Kontaktelemente 22 eine Form auf, die an eine Form des Anlagebereichs 24 angepasst ist. Beispielsweise sind die Kontakteelemente 22 des Käfigsegments 1 gemäß der ersten Ausführungsform nierenförmig ausgebildet. Alternativ können die Kontaktelemente 22 als separate Elemente ausgebildet sein, die lösbar oder unlösbar mit dem Käfigsegment verbunden sind.

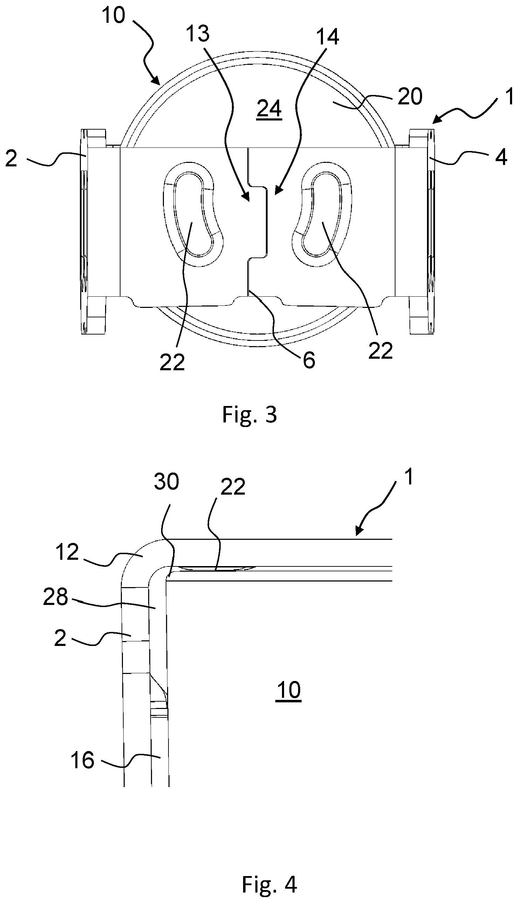

Wie in Fig. 4 gesehen werden kann, wird durch das Auskragen der Kontaktelemente 22 in die Tasche 8 ermöglicht, dass der in der Tasche 8 aufgenommene Wälzkörper 10 nicht direkt an dem Käfigsegment 1 anliegt. Dadurch kann vorteilhafterweise ein Biegeradius für die Ecke 12 vergrößert werden, so dass ein Freiraum 28 zwischen einer radialen Kante 30 des Wälzkörpers10 und dem Käfigsegment 1 geschaffen wird. Dies ermöglicht, eine Kerbspannung in dem Käfigsegment 10 zu reduzieren und eine Festigkeit des Käfigsegments 1 zu erhöhen.

Mit Bezug auf Fig. 3 wird ein Käfigsegment 1 gemäß einem zweiten Ausführungsbeispiel gezeigt. Das Käfigsegment 1 der Fig. 3 unterscheidet sich von dem Käfigsegment 1 der Fig. 1, 2, und 4 darin, dass die Kontaktelemente 22 in Umfangsrichtung näher an der Fügestelle 6 angeordnet sind, die sich der Anlagebereich 24 des Wälzkörpers 10 in der Fig. 3 weiter in die Mitte der Stirnfläche 20 erstreckt.

Obwohl in den Figuren das jeweilige Käfigsegment an den Seiten 18, die den Stirnflächen 20 des Wälzkörpers gegenüberliegen, jeweils zwei Kontaktelemente 22 vorgesehen sind, ist es auch möglich, dass nur ein Kontaktelement 22 oder mehr als zwei Kontaktelemente 22, wie zum Beispiel drei, vier, oder fünf Kontaktelemente 22, an einer Seite 18 vorgesehen sind. Es ist auch möglich, dass nur an einer der beiden Seiten 18 zumindest eine Kontaktelement 22 vorgesehen ist.

Zusammenfassend wird, um die Verschleißfestigkeit des Käfigsegment 1 bzw. des darin aufgenommenen Wälzkörpers 10 zu erhöhen, an einer Seite 18, die einer Stirnfläche 20 des Wälzkörpers 10 gegenüberliegt, ein Kontaktelement 22 vorgesehen, das in die Tasche 8 des Käfigsegments 1 auskragt und dazu ausgelegt ist, den Wälzkörper 10 zu kontaktieren. Dies hat ferner den Vorteil, dass die Reibung an der Stirnfläche 20 des Wälzkörpers 10 reduziert werden kann, da der Wälzkörper 10 lediglich an dem Kontaktelement 22 anläuft und nicht an dem Käfigsegment 1 selbst. Mit anderen Worten kann verhindert werden, dass der Wälzkörper 10 an einer scharfen Kante anläuft. Vorteilhafterweise kann auch ein Abschaben von Schmiermittel an der Kante verhindert werden.

### Bezugszeichenliste

- 1: Käfigsegment
- 2, 4: Metallblechbauteilen
- 6: Fügestelle
- 8: Tasche
- 10: Wälzkörper
- 12: Eckbereich
- 13, 14: Ausrichtungselemente
- 16: Führungselemente
- 18: Seite
- 20: Stirnfläche
- 22: Kontaktelement
- 24: Anlagebereich
- 26: Vertiefungsbereich
- 28: Freiraum
- 30: radiale Kante
- 32: Kante

## Patentansprüche

1. Käfigsegment (1) für einen Segmentkäfig, insbesondere für Großwälzlager, wobei das Käfigsegment (1) eine Tasche (8) bildet, die dazu geeignet ist, zumindest einen Wälzkörper (10) aufzunehmen,
**dadurch gekennzeichnet, dass** das Käfigsegment (1) an einer Seite (18), die einer Stirnfläche (20) des zumindest einen Wälzkörpers (10) gegenüberliegt, zumindest ein Kontaktelement (22) aufweist, das in die Tasche (8) des Käfigsegments (1) auskragt und dazu ausgelegt ist, den zumindest einen Wälzkörper (10) zu kontaktieren.

2. Käfigsegment (1) gemäß Anspruch 1, wobei der zumindest eine Wälzkörper (10) einen Anlagebereich (24) und einen Vertiefungsbereich (26) aufweist, wobei der Vertiefungsbereich (26) in einer Mitte der Stirnfläche (20) angeordnet ist und der Anlagebereich (24) um den Vertiefungsbereich (26) herum angeordnet ist, und wobei das zumindest eine Kontaktelement (22) so angeordnet ist, dass das zumindest eine Kontaktelement (22) die Stirnfläche (20) im Anlagebereich (24) kontaktiert.

3. Käfigsegment (1) gemäß Anspruch 1 oder 2, wobei das zumindest eine Kontaktelement (22) durch Umformen des Käfigsegments (1) gebildet ist.

4. Käfigsegment (1) gemäß Anspruch 3, wobei das zumindest eine Kontaktelement (22) geprägt, gestanzt, geschnitten und/oder gebogen ist.

5. Käfigsegment (1) gemäß Anspruch 1 oder 2, wobei das zumindest eine Kontaktelement (22) als ein separates Element gebildet und mit dem Käfigsegment (1) verbunden ist.

6. Käfigsegment (1) gemäß einem der vorherigen Ansprüche, wobei das zumindest eine Kontaktelement (22) eine Form aufweist, die an eine Form der Anlagefläche (24) angepasst ist.

7. Käfigsegment (1) nach Anspruch 6, wobei das zumindest eine Kontaktelement (22) linsenförmig und/oder nierenförmig ausgebildet ist.

8. Käfigsegment (1) gemäß einem der vorherigen Ansprüche, wobei das Käfigsegment (1) mit mehreren Kontaktelementen (22) versehen ist.

9. Käfigsegment (1) gemäß einem der vorherigen Ansprüche, wobei das Käfigsegment (1) aus zumindest einem Blechbauteil (2, 4) mit zumindest einer Fügestelle (6) zusammengefügt ist.

10. Käfigsegment (1) gemäß Anspruch 9, wobei jeweils ein Kontaktelement (22) in Umfangsrichtung seitlich neben der Fügestelle (6) angeordnet ist.

11. Käfigsegment (1) gemäß Anspruch 9 oder 10, wobei in einer Vorstufe der Fertigung das Käfigsegment (1) als Bausatz vorliegt, der aus einem oder mehreren, ebenen Metallblechbauteilen (2, 4) besteht, die dazu ausgelegt sind, zusammengesetzt zu werden, um das Käfigsegment (1) auszubilden, wobei das zumindest eine Kontaktelement (22) in zumindest einem der Metallblechbauteile (2,4) des Käfigsegments (1) ausgebildet ist, wobei bevorzugt das zumindest eine Kontaktelement (22) in der Vorstufe der Fertigung ausgebildet wird.

12. Wälzlagerkäfig, der aus einer Mehrzahl von Käfigsegmenten (1) nach einem der Ansprüche 1 bis 11 zusammengesetzt ist.
